# EUROPÄISCHE PATENTANMELDUNG

(11) **EP 2 835 527 A1**
(43) Veröffentlichungstag der Anmeldung: **11.02.2015**
(21) Anmeldenummer: 14177609.6
(22) Anmeldetag: 18.07.2014
(51) Int. Cl.: F02M 63/02, F02D 19/06

(54) **Injektor für eine Kraftstoffversorgungsanlage einer Brennkraftmaschine sowie Kraftstoffversorgungsanlage**

(30) Priorität: 08.08.2013 DE 102013013234
(71) Anmelder: MAN Diesel & Turbo SE, 86153 Augsburg (DE)
(72) Erfinder: Kern, Stefan, 86399 Bobingen (DE); Wörle, Werner, 86674 Baar (DE); Wellenkötter, Harald, 86163 Augsburg (DE); Pampus, Andreas, 86551 Aichach (DE); Fischer, Josef, 86459 Gessertshausen (DE)

(57) **Zusammenfassung**

Injektor (1) für eine Kraftstoffversorgungsanlage einer Brennkraftmaschine, nämlich für eine Common-Rail Kraftstoffversorgungsanlage einer Großdieselbrennkraftmaschine oder Schiffsdieselbrennkraftmaschine, mit einem Düsenkörper (2), einem Speicherkörper (4) und einem Speicherverschlusskörper (5), wobei der Düsenkörper (2) der Kraftstoffeinspritzung in einen Zylinder der Brennkraftmaschine dient, wobei der Speicherkörper (4) der Bereitstellung eines injektorindividuellen Kraftstoffspeichervolumens dient, wobei der Speicherverschlusskörper (5) den Speicherkörper (4) an einer dem Düsenkörper (2) gegenüberliegenden Seite verschließt, und wobei der Speicherkörper (4) und der Speicherverschlusskörper (5) stoffschlüssig miteinander verbunden sind.

## Beschreibung

Die Erfindung betrifft einen Injektor für eine Kraftstoffversorgungsanlage einer Brennkraftmaschine nach dem Oberbegriff des Anspruchs 1. Des Weiteren betrifft die Erfindung eine Kraftstoffversorgungsanlage einer Brennkraftmaschine nach dem Oberbegriff des Anspruchs 11.

Die DE 101 57 135 B4 offenbart eine Brennkraftmaschine, nämlich eine mit Schweröl betriebene Schiffsdieselbrennkraftmaschine, mit mehreren Zylindern, wobei jedem Zylinder ein Injektor einer Common-Rail Kraftstoffversorgungsanlage zugeordnet ist. Über die Injektoren ist in jeden der Zylinder der Brennkraftmaschine Kraftstoff einspritzbar. Die Common-Rail Kraftstoffversorgungsanlage gemäß DE 101 57 135 B4 umfasst eine mehrere Hochdruckpumpen aufweisende Pumpeinrichtung, um Kraftstoff von einem Niederdruckbereich der Common-Rail Kraft-stoffversorgungsanlage in einen Hochdruckbereich derselben zu fördern, wobei im Hochdruckbereich zwischen der Pumpeinrichtung und den Injektoren ein permanent unter Hochdruck stehendes Druckspeichersystem vorgesehen ist. Das permanent unter Hochdruck stehende Druckspeichersystem, welches auch als Common-Rail bezeichnet wird, weist nach der DE 101 57 135 B4 mehrere Speichereinheiten auf und ist über ebenfalls permanent unter Hochdruck stehende Hochdruckkraftstoffleitungen mit der Pumpeinrichtung verbunden. Das Druckspeichersystem ist weiterhin über abhängig vom Einspritztakt zeitweise unter Hochdruck stehende Hochdruckkraftstoffleitungen mit den Injektoren verbunden. Den abhängig vom Einspritztakt zeitweise unter Hochdruck stehenden Hochdruckkraftstoffleitungen, welche die Injektoren mit dem Druckspeichersystem verbinden, sind Schaltelemente zugeordnet, die abhängig vom Einspritztakt den Injektoren Kraftstoff zuleiten.

Da bei Großdieselbrennkraftmaschine bzw. Schiffsdieselbrennkraftmaschinen der räumliche Abstand zwischen den Injektoren der Kraftstoffversorgungsanlage und dem Druckspeichersystem derselben relativ groß sein kann und demnach die abhängig vom Einspritztakt zeitweise unter Hochdruck stehenden Hochdruckkraftstoffleitungen, welche die Injektoren mit dem Druckspeichersystem verbinden, relativ lang ausgeführt sein können, sind zur Reduzierung eines Druckverlusts bereits Injektoren bekannt, die neben einem Düsenkörper, welcher der eigentlichen Einspritzung des Kraftstoffs in einen Zylinder der Brennkraftmaschine dient, einen Speicherkörper umfassen, welcher ein injektorindividuelles Kraftstoffspeichervolumen bereitstellt. Der Speicherkörper ist dabei von einem Speicherverschlusskörper verschlossen.

Bei aus der Praxis bekannten Injektoren mit einem Speicherkörper und Speicherverschlusskörper sind der Speicherkörper mit einem Haltekörper, der Speicherkörper mit dem Speicherverschlusskörper und der Haltekörper mit dem Düsenkörper jeweils lösbar über eine Schraubverbindung verbunden. Durch das Verschrauben mehrerer Bauteile erhöht sich einerseits der Montageaufwand, andererseits müssen die Schraubverbindungen hohen Drücken standhalten, um die Dichtheit der Kraftstoffversorgungsanlage zu gewährleisten, wodurch sich der Abdichtaufwand erhöht.

Hiervon ausgehend liegt der vorliegenden Erfindung die Aufgabe zugrunde, einen neuartigen Injektor für eine Kraftstoffversorgungsanlage zu schaffen, der mit geringerem Aufwand herstellbar und montierbar ist. Des Weiteren soll eine neuartige Kraftstoffversorgungsanlage mit solchen Injektoren bereitgestellt werden.

Diese Aufgabe wird durch einen Injektor für eine Kraftstoffversorgungsanlage nach Anspruch 1 gelöst. Erfindungsgemäß sind der Speicherverschlusskörper und der Speicherkörper stoffschlüssig miteinander verbunden.

Mit der hier vorliegenden Erfindung wird vorgeschlagen, bei einem Injektor, der einen Speicherkörper zur Bereitstellung eines injektorindividuellen Kraftstoffspeichervolumens mit einem Speicherverschlusskörper umfasst, den Speicherkörper und den Speicherverschlusskörper des Injektors stoffschlüssig und demnach unlösbar miteinander zu verbinden. Durch die stoffschlüssige Verbindung des Speicherkörpers und des Speicherverschlusskörpers reduziert sich die Anzahl der Einzelteile des Injektors, die bei der Montage desselben miteinander verbunden werden müssen. Durch die stoffschlüssige Verbindung von Speicherverschlusskörper und Speicherkörper wird weiterhin eine potentielle Undichtigkeitsstelle des Injektors eliminiert, sodass auf aufwendige Maßnahmen zur Abdichtung der nach dem Stand der Technik vorhandenen Hochdruckdichtfläche zwischen dem Speicherverschlusskörper und dem Speicherkörper des Injektors verzichtet werden kann.

Nach einer vorteilhaften Weiterbildung der Erfindung sind der Speicherverschlusskörper und der Speicherkörper durch eine Schweißverbindung, insbesondere durch Reibschweißen, vorzugsweise durch Rotationsreibschweißen, stoffschlüssig miteinander verbunden. Das Bereitstellen der stoffschlüssigen Verbindung zwischen Speicherverschlusskörper und Speicherkörper durch Reibschweißen, vorzugsweise durch Rotationsreibschweißen, erlaubt eine besonders vorteilhafte, stoffschlüssige Verbindung von Speicherverschlusskörper und Speicherkörper des jeweiligen Injektors.

Nach einer ersten Variante der Erfindung greift eine Hochdruckkraftstoffleitung der Kraftstoffversorgungsanlage, die der Führung von Kraftstoff ausgehend von einem Druckspeichersystem in Richtung auf den Injektor dient, unter Ausbildung eines Top-Feed Injektors am Speicherverschlusskörper an, wobei die Hochdruckkraftstoffleitung mit dem Speicherverschlusskörper insbesondere durch eine Schraubverbindung lösbar verbunden ist. Ein vorzugsweise vorhandener Haltekörper und der Speicherkörper sind stoffschlüssig insbesondere durch eine Schweißverbindung verbunden.

Nach einer zweiten, alternativen Variante der Erfindung greift eine Hochdruckkraftstoffleitung der Kraftstoffversorgungsanlage, die der Führung von Kraftstoff ausgehend von einem Druckspeichersystem in Richtung auf den Injektor dient, unter Ausbildung eines Side-Feed Injektors an einem Haltekörper an, wobei der Haltekörper und der Speicherkörper insbesondere durch eine Schraubverbindung lösbar verbunden sind, und wobei die Hochdruckkraftstoffleitung mit dem Haltekörper ebenfalls insbesondere durch eine Schraubverbindung lösbar verbunden ist.

Die erfindungsgemäße Kraftstoffversorgungsanlage ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung eines als Side-Feed Injektor ausgebildeten Injektors einer Common-Rail Kraftstoffversorgungsanlage;
- Fig. 2: eine stark schematisierte Darstellung eines als Top-Feed Injektor ausgebildeten Injektors einer Common-Rail Kraftstoffversorgungsanlage; und
- Fig. 3: einen Speicherkörper und einen Speicherverschlusskörper des Injektors der Fig. 1 in einem unverbundenen Zustand derselben.

Die hier vorliegende Erfindung betrifft eine Common-Rail Kraftstoffversorgungsanlage einer Großdieselbrennkraftmaschine, insbesondere einer mit Schweröl betriebenen Schiffsdieselbrennkraftmaschine. Common-Rail Kraftstoffversorgungsanlagen verfügen über einen Niederdruckbereich sowie einen Hochdruckbereich.

Der Hochdruckbereich einer Common-Rail Kraftstoffversorgungsanlage umfasst eine zumindest eine Hochdruckpumpe aufweisende Pumpeinrichtung und ein zumindest eine Speichereinheit aufweisendes Druckspeichersystem, wobei die Pumpeinrichtung Kraftstoff aus dem Niederdruckbereich in den Hochdruckbereich fördert und mit dem Druckspeichersystem über mindestens eine Hochdruckkraftstoffleitung verbunden ist. Das Druckspeichersystem sowie die oder jede das Druckspeichersystem mit der Pumpeinrichtung verbindende Hochdruckkraftstoffleitung stehen permanent unter einem hohen Arbeitsdruck. Ausgehend vom Druckspeichersystem ist der Kraftstoff über Injektoren in Zylinder einspritzbar, wobei jeder Injektor mit dem Druckspeichersystem über mindestens eine Hochdruckkraftstoffleitung verbunden ist, die abhängig vom Einspritztakt der Brennkraftmaschine zeitweise unter Hochdruck steht. Jeder abhängig vom Einspritztakt der Brennkraftmaschine zeitweise unter Hochdruck stehenden Hochdruckkraftstoffleitung ist ein Schaltelement zugeordnet, wobei das Schaltelement abhängig vom Einspritztakt der Brennkraftmaschine entweder den Kraftstofffluss durch die zeitweise unter Hochdruck stehenden Hochdruckkraftstoffleitung freigibt oder sperrt.

Die hier vorliegende Erfindung betrifft nun Details der Injektoren einer solchen Common-Rail Kraftstoffversorgungsanlage, nämlich solche Injektoren, die zur Bereitstellung eines injektorindividuellen Kraftstoffspeichervolumens neben der oder jeder Speichereinheit des Druckspeichersystems einen Speicherkörper mit einem Speicherverschlusskörper umfassen. Mit einem solchen Speicherkörper kann ein Druckabfall im Hochdruckbereich der Common-Rail Kraftstoffversorgungsanlage, der sich in Folge langer Kraftstoffleitungen zwischen dem Druckspeichersystem und den Injektoren ausbilden kann, reduziert werden.

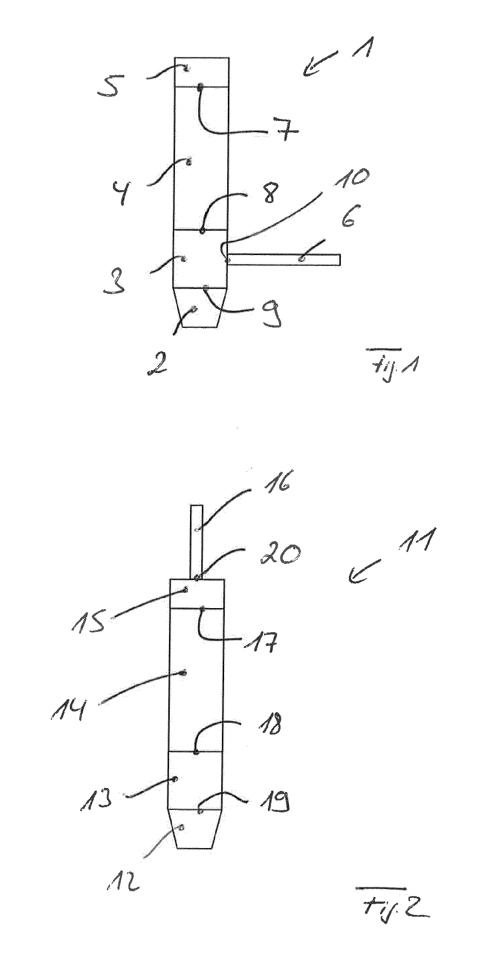

Fig. 1 und 2 zeigen stark schematisierte Ansichten von Injektoren 1 bzw. 11, wobei jeder der gezeigten Injektoren 1 bzw. 11 einen Düsenkörper 2 bzw. 12, einen Haltekörper 3 bzw. 13, einen Speicherkörper 4 bzw. 14 und einen Speicherverschlussköper 5 bzw. 15 umfasst. Jedem der Injektoren 1 bzw. 11 ist Kraftstoff über eine Hochdruckkraftstoffleitung 6 bzw. 16 zuführbar.

Der Düsenkörper 2, 12 des jeweiligen Injektors 1, 11 verfügt vorzugsweise über eine nicht gezeigte Düsennadel und dient der eigentlichen Kraftstoffeinspritzung in einen Zylinder einer Brennkraftmaschine. Der Düsenkörper 2, 12 greift an einer Seite des Haltekörpers 3, 13 des jeweiligen Injektors 1, 11 an und ist mit demselben lösbar, insbesondere durch eine Schraubverbindung 9, 19, verbunden.

Der Speicherkörper 4, 14 des jeweiligen Injektors 1, 11 greift an einer gegenüberliegenden Seite am Haltekörper 3, 13 an und dient der Bereitstellung eines injektorindividuellen Kraftstoffspeichervolumens in unmittelbarer Nähe zum Düsenkörper 2, 12 und damit in unmittelbarer Nähe zur Kraftstoffeinspritzstelle in den jeweiligen Zylinder der Brennkraftmaschine.

Der Speicherkörper 4, 14 des jeweiligen Injektors 1, 11 ist an einer dem Haltekörper 3, 13 gegenüberliegenden Seite von dem jeweiligen Speicherverschlussköper 5, 15 verschlossen.

In Fig. 1 ist der Injektor 1 als sogenannter Side-Feed Injektor ausgeführt, bei welchem eine Hochdruckkraftstoffleitung 6, die der Zuführung von Kraftstoff ausgehend vom Druckspeichersystem in Richtung auf den Injektor 1 dient, am Haltekörper 3 angreift. In diesem Fall ist demnach der Kraftstoff über den Haltekörper 3 dem Speicherkörper 4 sowie dem Düsenkörper 2 zuführbar.

In Fig. 2 ist der Injektor 11 als sogenannter Top-Feed Injektor ausgeführt, bei welchem die Hochdruckkraftstoffleitung 16, die der Zuführung von Kraftstoff ausgehend vom Druckspeichersystem in Richtung auf den Injektor 11 dient, am Speicherverschlusskörper 15 angreift. In diesem Fall ist demnach der Kraftstoff über den Speicherverschlusskörper 15 dem Speicherkörper 14 sowie dem Düsenkörper 12 zuführbar.

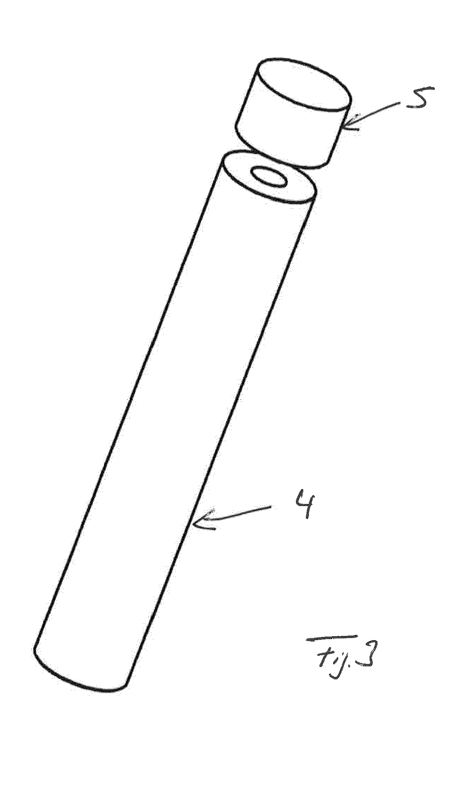

Im Sinne der Erfindung sind der Speicherverschlusskörper 5, 15 und der Speicherkörper 4, 14 des jeweiligen Injektors 1 bzw. 11 stoffschlüssig und damit unlösbar miteinander verbunden. Die stoffschlüssige Verbindung des Speicherverschlusskörper 5, 15 und des Speicherkörpers 4, 14 des jeweiligen Injektors 1 bzw. 11 erfolgt über eine Schweißverbindung 7, 17, vorzugsweise durch Reibschweißen, insbesondere durch Rotationsreibschweißen. Fig. 3 zeigt einen Speicherverschlusskörper 5 zusammen mit einem Speicherkörper 4 des Injektors 1 vor dem stoffschlüssigen Verbinden derselben.

Durch die stoffschlüssige Verbindung des Speicherverschlusskörper 5, 15 mit dem Speicherkörper 4, 14 des jeweiligen Injektors 1 bzw. 11 reduziert sich die Anzahl der bei der Montage der Kraftstoffversorgungsanlage miteinander zu verbindenden Bauteile. Weiterhin wird eine mögliche Undichtigkeitsstelle im Hochdruckbereich der Common-Rail Kraftstoffversorgungsanlage eliminiert. Demnach kann auf aufwendige Abdichtmaßnahmen dieser möglichen Undichtigkeitsstelle zwischen dem Speicherverschlusskörper 5, 15 und dem Speicherkörper 4, 14 des jeweiligen Injektors 1 bzw. 11 verzichtet werden.

Wie bereits ausgeführt, ist in Fig. 1 der Injektor 1 als Side-Feed Injektor ausgeführt. In diesem Fall sind der Haltekörper 3 und der Speicherkörper 4 insbesondere durch eine Schraubverbindung 8 lösbar verbunden. Weiterhin ist in diesem Fall die Hochdruckkraftstoffleitung 6 mit dem Haltekörper 4 ebenfalls insbesondere durch eine Schraubverbindung 10 lösbar verbunden.

Dann, wenn wie in Fig. 2 gezeigt, der Injektor 11 als Top-Feed Injektor ausgeführt ist, sind der Haltekörper 13 und der Speicherkörper 14 unlösbar und stoffschlüssig insbesondere durch eine Schweißverbindung 18 verbunden, wohingegen die Hochdruckkraftstoffleitung 16 mit dem Speicherverschlusskörper 15 insbesondere durch eine Schraubverbindung 20 lösbar verbunden ist. Hiermit kann eine weitere mögliche Undichtigkeitsstelle eliminiert werden.

In der Variante der Fig. 2, in welcher der Injektor 11 als Top-Feed Injektor ausgeführt ist, kann gegebenenfalls auf einen separaten Haltekörper 13 verzichtet werden und der Düsenkörper 12 direkt am Speicherkörper 14 über eine Schraubverbindung lösbar angreifen, wobei dann der Haltekörper integraler Bestandteil entweder des Düsenkörpers 12 oder des Speicherkörpers 14 ist.

### Bezugszeichenliste

- 1: Injektor
- 2: Düsenkörper
- 3: Haltkörper
- 4: Speicherkörper
- 5: Speicherverschlusskörper
- 6: Hochdruckkraftstoffleitung
- 7: Schweißverbindung
- 8: Schaubverbindung
- 9: Schaubverbindung
- 10: Schraubverbindung

- 11: Injektor
- 12: Düsenkörper
- 13: Haltkörper
- 14: Speicherkörper
- 15: Speicherverschlusskörper
- 16: Hochdruckkraftstoffleitung
- 17: Schweißverbindung
- 18: Schweißverbindung
- 19: Schaubverbindung
- 20: Schraubverbindung

## Patentansprüche

1. Injektor (1, 11) für eine Kraftstoffversorgungsanlage einer Brennkraftmaschine, nämlich für eine Common-Rail Kraftstoffversorgungsanlage einer Großdieselbrennkraftmaschine oder Schiffsdieselbrennkraftmaschine, mit einem Düsenkörper (2, 12), einem Speicherkörper (4, 14) und einem Speicherverschlusskörper (5, 15), wobei der Düsenkörper (2, 12) der Kraftstoffeinspritzung in einen Zylinder der Brennkraftmaschine dient, wobei der Speicherkörper (4, 14) der Bereitstellung eines injektorindividuellen Kraftstoffspeichervolumens dient, und wobei der Speicherverschlusskörper (5, 15) den Speicherkörper (4, 14) an einer dem Düsenkörper (2, 12) gegenüberliegenden Seite verschließt, **dadurch gekennzeichnet, dass** der Speicherkörper (4, 14) und der Speicherverschlusskörper (5, 15) stoffschlüssig miteinander verbunden sind.

2. Injektor nach Anspruch 1, **dadurch gekennzeichnet, dass** der Speicherkörper (4, 14) und der Speicherverschlusskörper (5, 15) durch eine Schweißverbindung (7, 17) stoffschlüssig miteinander verbunden sind.

3. Injektor nach Anspruch 2, **dadurch gekennzeichnet, dass** der Speicherkörper (4, 14) und der Speicherverschlusskörper (5, 15) durch Reibschweißen, insbesondere durch Rotationsreibschweißen, stoffschlüssig verbunden sind.

4. Injektor nach einem der Ansprüche 1 bis 3, **gekennzeichnet durch** einen Haltekörper (3, 13), wobei der Düsenkörper (2, 12) an einer ersten Seite des Haltekörpers (3, 13) angreift, wobei der Speicherkörper (4, 14) an einer zweiten Seite des Haltekörpers (3, 13) angreift, wobei der Speicherverschlusskörper (5, 15) den Speicherkörper an einer dem Haltekörper (3, 13) gegenüberliegenden Seite verschließt, und wobei der Haltekörper (3, 13) und der Düsenkörper (2, 12) lösbar miteinander verbunden sind.

5. Injektor nach Anspruch 4, **dadurch gekennzeichnet, dass** der Haltekörper (3, 13) und der Düsenkörper (2, 12) durch eine Schraubverbindung (9, 19) miteinander verbunden sind.

6. Injektor nach einem der Ansprüche 1 bis 5, **dadurch gekennzeichnet, dass** eine Hochdruckkraftstoffleitung (16) der Kraftstoffversorgungsanlage, die der Führung von Kraftstoff ausgehend von einem Druckspeichersystem in Richtung auf den Injektor (11) dient, unter Ausbildung eines Top-Feed Injektors am Speicherverschlusskörper (15) angreift.

7. Injektor nach Anspruch 6, **dadurch gekennzeichnet, dass** die Hochdruckkraftstoffleitung (16) mit dem Speicherverschlusskörper (15) insbesondere durch eine Schraubverbindung (20) lösbar verbunden ist.

8. Injektor nach Anspruch 6 oder 7, **dadurch gekennzeichnet, dass** der Haltekörper (13) und der Speicherkörper (14) stoffschlüssig insbesondere durch eine Schweißverbindung (18) verbunden sind.

9. Injektor nach Anspruch 4 oder 5, **dadurch gekennzeichnet, dass** eine Hochdruckkraftstoffleitung (6) der Kraftstoffversorgungsanlage, die der Führung von Kraftstoff ausgehend von einem Druckspeichersystem in Richtung auf den Injektor (1) dient, unter Ausbildung eines Side-Feed Injektors am Haltekörper (3) angreift.

10. Injektor nach Anspruch 9, **dadurch gekennzeichnet, dass** der Haltekörper (3) und der Speicherkörper (4) insbesondere durch eine Schraubverbindung (8) lösbar verbunden sind, und dass die Hochdruckkraftstoffleitung (6) mit dem Haltekörper (4) ebenfalls insbesondere durch eine Schraubverbindung (10) lösbar verbunden ist.

11. Kraftstoffversorgungsanlage, nämlich Common-Rail Kraftstoffversorgungsanlage einer Großdieselbrennkraftmaschine oder Schiffsdieselbrennkraftmaschine, mit einem Niederduckbereich, mit einer mindestens eine Hockdruckpumpe umfassenden Pumpeinrichtung, um Kraftstoff aus dem Niederdruckbereich der Kraftstoffversorgungsanlage in einen Hochdruckbereich derselben zu fördern, wobei im Hochdruckbereich zwischen der Pumpeinrichtung und Zylindern zugeordneten Injektoren ein mindestens eine Speichereinheit aufweisendes, permanent unter Hochdruck stehendes Druckspeichersystem vorgesehen ist, wobei das Druckspeichersystem über mindestens eine ebenfalls permanent unter Hochdruck stehende Hochdruckkraftstoffleitung mit der Pumpeinrichtung verbunden ist, wobei das Druckspeichersystem über abhängig vom Einspritztakt zeitweise unter Hochdruck stehende Hochdruckkraftstoffleitungen mit den Injektoren verbunden ist, **dadurch gekennzeichnet, dass** die Injektoren (1, 11) nach einem oder mehreren der Ansprüche 1 bis 10 ausgebildet sind.
